# FASCICULE DE BREVET EUROPEEN

(11) **EP 3 809 119 B1**
(45) Date de publication et mention de la délivrance du brevet: **15.05.2024**
(21) Numéro de dépôt: 20200123.6
(22) Date de dépôt: 05.10.2020
(51) Int. Cl.: G01N 21/84

(54) **DISPOSITIF ET PROCÉDÉ POUR L'ÉVALUATION DE LA QUALITÉ D'UN REVÊTEMENT**
VORRICHTUNG UND VERFAHREN ZUR BEWERTUNG DER QUALITÄT EINER BESCHICHTUNG
DEVICE AND METHOD FOR ASSESSING THE QUALITY OF A COATING

(30) Priorité: 15.10.2019 FR 1911500
(43) Date de publication de la demande: 21.04.2021
(73) Titulaire: COMPAGNIE PLASTIC OMNIUM SE, 69007 Lyon (FR)
(72) Inventeur: DUEHR, Sascha, 01150 Sainte-Julie (FR); CLAUSS, Fabien, 01150 Sainte-Julie (FR); MINDERLEIN, Marco, 01150 Sainte-Julie (FR)
(74) Mandataire: LLR

(56) Documents cités:
- EP-A1- 0 658 721
- US-A- 4 707 613
- Anonymous: "REVIEW: ThorFire VG-15S Flashlight", , 4 avril 2017 (2017-04-04), pages 1-23, XP055782527, Extrait de l'Internet: URL:https://www.candlepowerforums.com/vb/s howthread.php?432613-REVIEW-ThorFire-VG-15 S-Flashlight&styleid=33 [extrait le 2021-03-05]

## Description

L'invention concerne un dispositif d'évaluation de la qualité d'un revêtement sur la surface d'un composant. La surface est disposée dans un évidement et/ou sur un bord extérieur du composant.

En outre, l'invention concerne un procédé d'évaluation de la qualité d'un revêtement d'une telle surface à l'aide d'un dispositif selon l'invention.

### ÉTAT DE LA TECHNIQUE

US 4 707 613 A divulgue un dispositif d'évaluation de la densité d'un apprêt noir sur un pare-brise. Ce dispositif comprend au moins une source lumineuse de sorte qu'une partie du pare-brise peut être irradiée par la lumière provenant de la source lumineuse et la densité de ce revêtement peut être évaluée par une détection de la lumière traversant le revêtement de la surface. Le dispositif comprend en outre au moins un capteur de lumière et une unité d'exploitation, le capteur de lumière étant disposé de sorte que le capteur de lumière peut détecter la lumière traversant la surface depuis une position extérieure au composant. Ladite unité d'exploitation peut effectuer une évaluation de la densité du revêtement à partir du signal du capteur. De plus, US 4 707 613 A divulgue un procédé d'évaluation de la densité dudit apprêt noir avec le dispositif mentionné ci-dessus dans lequel la densité du revêtement est évaluée par la détection de la lumière traversant le revêtement de la surface.

Les composants en matériau au moins semi-transparent, comme le polycarbonate ou des matériaux plastiques comparables, sont par exemple connus dans l'industrie automobile. Ces composants sont utilisés, par exemple, comme pare-chocs ou comme autres parties de l'enveloppe extérieure des véhicules comme des pièces de carrosserie extérieure. Les composants sont généralement revêtus pour les protéger contre les influences extérieures. Les influences extérieures peuvent être, par exemple, les intempéries, l'eau salée, les solvants ou les détergents.

En particulier, le revêtement des composants en plastique peut se trouver sur une face ou sur les deux faces. Un revêtement monocouche ou multicouche, en particulier un revêtement à trois couches, peut être appliqué pour augmenter la résistance contre les rayures et les influences environnementales et peut être appliqué en tant que support de peinture. Le revêtement peut, par exemple, être à base de polyuréthane (PUR).

Afin de finaliser la fabrication des composants pour l'enveloppe extérieure des véhicules, des évidements sont généralement réalisés après coup dans les composants. Ceux-ci peuvent être utilisés pour fixer des supports, tels que des supports de plaque d'immatriculation, ou pour fixer des éléments d'éclairage, des actionneurs ou des capteurs. Le fait de réaliser ultérieurement des évidements peut entraîner des ouvertures - ou trous - qui, par exemple, représentent jusqu'à 10 % de la surface du composant. Les évidements peuvent, par exemple, être fraisés. La forme de l'évidement est bordée par une arête de coupe par le matériau du composant. Le matériau de base du composant, par exemple le polycarbonate, se présente sans revêtement sur cette arête de coupe. Par conséquent, ces arêtes de coupe doivent être de nouveau recouvertes après la réalisation des évidements. L'objectif est donc de recouvrir toute la surface de l'arête de coupe sans défaut ni révélation du matériau de base. Ce n'est qu'ainsi que le matériau de base du composant, par exemple le polycarbonate, peut être efficacement protégé contre les influences extérieures, même dans la zone des arêtes de coupe, et que sa durée de vie peut être augmentée.

En général, il existe un risque que le revêtement plat appliqué précédemment puisse se détacher dans la zone de l'arête de coupe et/ou être infiltré par l'humidité. Ce risque existe en particulier si le revêtement appliqué ultérieurement sur l'arête de coupe est défectueux et non continu. L'humidité attaque le polycarbonate du composant. Il est également important de sceller de manière optimale l'arête de coupe pour protéger contre l'humidité les éléments électroniques situés derrière l'enveloppe extérieure ou dans l'évidement. Ces éléments électroniques peuvent par exemple être un radar, un lidar, des caméras, etc. Par conséquent, il faut également éviter que ces éléments électroniques ne tombent en panne. L'orientation correcte d'un capteur ou d'un actionneur dans une ouverture est également important, et ceci peut être compromis par l'infiltration de saleté ou d'humidité.

Le revêtement dans la zone des arêtes de coupe des évidements est généralement réalisé à l'aide d'applicateurs tels que des brosses ou des éponges. La quantité de vernis ou d'apprêt primaire d'adhérence pour le revêtement peut être dosée dans l'applicateur. Cependant, la quantité d'apprêt et de vernis appliquée sur la surface à recouvrir ne peut être contrôlée. Par conséquent, il est nécessaire de contrôler ensuite le revêtement appliqué.

Des procédés de contrôle permettant d'évaluer la qualité des revêtements sont connus dans l'état de la technique. Il est ainsi possible d'effectuer un contrôle visuel, qui ne donne cependant pas de résultats fiables et ne peut pas être utilisé systématiquement dans le processus de fabrication. En général, les autres procédés de contrôle entraînent des destructions. Par conséquent, jusqu'à présent, on effectuait des contrôles optiques aléatoires sur des composants individuels, ou des composants individuels étaient placés aléatoirement dans des solvants afin de vérifier le caractère complet du revêtement. Cependant, si le revêtement est défectueux, ces composants testés sont détruits par le solvant. Les composants testés ne peuvent plus être réparés ni réutilisés ultérieurement.

Un autre inconvénient de ces procédés de contrôle est leur coût élevé, car les défauts du revêtement doivent être détectés par un opérateur après insertion dans un solvant.

Le but de l'invention est donc de proposer un procédé et un dispositif d'évaluation de la qualité d'un revêtement qui permettra de surmonter les inconvénients mentionnés ci-dessus.

Ce but est atteint par le dispositif de la revendication 1, qui est un dispositif d'évaluation de la qualité d'un revêtement sur au moins une surface d'un composant, dans lequel la surface est disposée dans un évidement et/ou sur un bord extérieur du composant, la surface formant un bord périphérique, et le composant est constitué au moins partiellement d'un matériau au moins semi-transparent, en particulier transparent. Le dispositif comprend au moins une source lumineuse et au moins un cache, de sorte que le composant peut être irradié par la lumière provenant de la source lumineuse et la surface peut être protégée par le cache contre l'irradiation lumineuse directe, de telle sorte que la lumière peut être couplée dans le matériau et ne peut passer vers la surface formant le bord périphérique qu'indirectement à travers l'intérieur du matériau du composant, et une qualité du revêtement peut être évaluée par une détection de la lumière traversant le revêtement de la surface, le dispositif comprenant au moins un capteur de lumière et une unité d'exploitation, le capteur de lumière étant disposé à proximité de la surface dans l'évidement et/ou sur le bord extérieur, de sorte que le capteur de lumière peut détecter la lumière traversant la surface depuis une position extérieure au composant, et l'unité d'exploitation peut effectuer une évaluation qualitative du revêtement à partir du signal du capteur,le cache étant appliqué sur des surfaces adjacentes à la surface à évaluer.

Ainsi, la surface forme un bord périphérique d'un évidement du composant et/ou forme un bord périphérique sur un bord extérieur du composant.

Suivant d'autres caractéristiques optionnelles du dispositif, prises seules ou en combinaison :
- le capteur de lumière est rotatif et/ou mobile et peut balayer la surface au moins par endroits.
- au moins deux, en particulier au moins quatre capteurs de lumière sont disposés de manière décalée et/ou inclinée l'un par rapport à l'autre le long de la surface, la surface ayant de préférence la forme d'un pourtour complet.
- un élément diffuseur de lumière est disposé à proximité de la surface, lequel élément dirige la lumière traversant le revêtement vers au moins un capteur de lumière.
- le cache est appliqué des deux côtés sur des surfaces adjacentes au bord extérieur ou à l'évidement, et le cache est en particulier formé sur la face tournée vers la surface du composant de manière à être totalement réfléchissant au moins par endroits, en particulier spéculaire par endroits.

Ce but est également atteint par un procédé d'évaluation de la qualité d'un revêtement d'une surface avec un dispositif du type précité, dans lequel la surface est disposée dans un évidement et/ou sur un bord extérieur du composant, et forme un bord périphérique, procédé dans lequel des surfaces adjacentes à la surface sont couvertes de manière opaque au moyen du cache, notamment sur ses deux faces, la lumière provenant de la source lumineuse est couplée dans le matériau transparent ou semi-transparent, en particulier le polycarbonate et/ou dans le matériau multicouche ou revêtu en surface du composant, et une qualité du revêtement est évaluée par la détection de la lumière traversant le revêtement de la surface.

Suivant d'autres caractéristiques optionnelles du procédé, prises seules ou en combinaison :
- le revêtement est au moins partiellement transparent, opaque, en particulier noir, et est de préférence un revêtement à base de polyuréthane, et l'évaluation de la qualité est effectuée sur la base d'une quantité de lumière traversant le revêtement de la surface, en particulier une variation de l'épaisseur du revêtement est évaluée en fonction d'une variation de l'intensité lumineuse détectée.
- la lumière est couplée dans le composant par l'intermédiaire d'une surface transparente et est conduite vers la surface formant le bord périphérique, en particulier la lumière de la source lumineuse est couplée dans une plage angulaire de 20° ou moins, en particulier de 10° ou moins, avec l'angle de réflexion totale du matériau et dans la direction de la surface.
- l'au moins un capteur de lumière détermine une quantité et/ou une position de la lumière rayonnant à travers la surface afin de déterminer l'épaisseur et/ou la position d'un emplacement défectueux du revêtement de la surface.
- un contrôle à 100 % de tous les composants est effectué et une erreur de production systématique, en particulier une erreur dans l'application de vernis et/ou de la vernisseuse, est évaluée par la détermination de position.
- l'épaisseur du composant est petite, la surface formant le bord périphérique formant une surface relativement petite dans un rapport d'au moins 1:100, de préférence 1:1000, en particulier 1:5000 par rapport à la surface totale du composant.
- au moins un capteur de lumière est disposé à proximité de la surface formant le bord périphérique, en particulier un capteur de lumière rotatif ou mobile et/ou une pluralité de capteurs de lumière qui sont décalés ou inclinés les uns par rapport aux autres, pour déterminer la position de la lumière traversant le revêtement.
- la source lumineuse fournit une lumière de différentes couleurs, en particulier une lumière adaptée au matériau du composant et/ou du revêtement, de l'infrarouge à l'ultraviolet et/ou à intensité variable.
- l'évaluation de la qualité du revêtement de la surface est effectuée dans une pièce complètement sombre.

### DIVULGATION DE L'INVENTION

L'objet de l'invention est un dispositif permettant d'évaluer la qualité d'un revêtement sur au moins une surface d'un composant. La surface est disposée dans un évidement et/ou sur un bord extérieur du composant, et forme un bord périphérique. Le composant est constitué au moins partiellement d'un matériau semi-transparent, particulièrement transparent.

Le composant comporte au moins une source lumineuse et au moins un cache afin que le composant puisse être irradié par la lumière provenant de la source lumineuse et que la surface puisse être protégée de l'irradiation directe de la lumière par le cache. La lumière peut donc être couplée dans le matériau et ne peut atteindre la surface du bord périphérique qu'indirectement par l'intérieur du matériau du composant. La qualité du revêtement est évaluée en détectant la lumière qui pénètre à travers le revêtement de la surface.

Par exemple, il est possible d'évaluer la qualité des revêtements de plusieurs surfaces en dotant chaque surface d'au moins un cache tel que décrit. Il est ainsi possible d'examiner les surfaces presque simultanément, ce qui permet, par exemple, de n'utiliser qu'une seule source lumineuse. L'au moins une surface est donc la surface à contrôler concrètement. Celle-ci peut également être désignée comme la surface de test.

Le composant peut être, par exemple, un composant en plastique de l'enveloppe extérieure d'un véhicule, tel qu'un pare-chocs. Ces composants en plastique sont de préférence en polycarbonate. Le polycarbonate peut être au moins partiellement semi-transparent ou transparent. Le polycarbonate est généralement transparent.

Le revêtement de la surface périphérique de l'ouverture, en revanche, est de préférence opaque et peut être constitué d'un vernis. De préférence, le revêtement peut être constitué d'un vernis noir. Un scellant opaque peut être utilisé comme revêtement. Celui-ci peut être noir, par exemple, et peut contenir jusqu'à 30 % de particules solides.

Un tel composant en polycarbonate peut avoir un revêtement monocouche sur une face et un revêtement à trois couches sur l'envers. Un revêtement monocouche peut également être appliqué sur les deux faces. Au moins l'un des revêtements peut être constitué d'un matériau à base de polyuréthane. Si au moins un évidement est ensuite réalisé dans le composant ou si la forme du composant est modifiée, en particulier la forme du contour extérieur, au moins une arête de coupe est créée. Cette arête de coupe peut être décrite par une surface ou une arête périphérique non pourvue d'un revêtement. Cette surface doit ensuite être pourvue d'un revêtement afin de protéger l'ensemble de la surface du composant des influences extérieures. Le revêtement ultérieur peut être effectué avec des applicateurs ou des machines à peindre, par exemple. Dans de nombreux cas, il n'est pas possible et/ou économiquement faisable de perforer ou d'effectuer un évidement avec un processus similaire avant l'application du vernis en raison de la diversité des variantes. Par exemple, les évidements pour les porte-plaques d'immatriculation varient d'un pays à l'autre.

Grâce au dispositif selon l'invention, il est possible de vérifier si ces revêtements appliqués par la suite, ainsi que le revêtement des composants eux-mêmes, sont exempts de défauts. En particulier, il est ainsi possible de détecter les emplacements où aucun revêtement, c'est-à-dire aucun vernis, n'a été appliqué. En outre, le dispositif décrit permet de détecter les emplacements où le revêtement est très fin. En particulier, il est possible d'examiner les revêtements dans la zone des arêtes de coupe, c'est-à-dire les bords périphériques. Pour ce faire, le composant est irradié avec au moins une source lumineuse, et ainsi la lumière est couplée dans le matériau du composant. Avant cela, les zones dans lesquelles les arêtes de coupe sont présentes sont protégées contre l'irradiation directe de la lumière. Ceci est réalisé au moyen d'au moins un cache le long du bord périphérique.

Si, par exemple, le composant possède un évidement avec un bord périphérique ultérieurement revêtu, une sorte de plaque peut être placée sur l'évidement. Cette plaque forme un cache. La plaque doit être légèrement plus grande que l'évidement pour protéger le bord périphérique de l'irradiation directe de lumière par la source lumineuse. Il est préférable d'installer un cache de chaque côté du composant, c'est-à-dire de chaque côté de l'évidement. De cette façon, il est possible d'éviter l'irradiation directe de la lumière sur le bord périphérique des deux côtés du composant. En d'autres termes, il est ainsi possible de protéger la totalité de l'évidement de l'irradiation directe de la lumière. Si le contour extérieur du composant est ensuite modifié, l'arête de coupe ne se trouve pas dans un évidement, mais dans la zone périphérique du composant. Afin de vérifier la qualité d'un tel bord périphérique, il doit être complètement couvert. Dans ce cas, le cache pourrait par exemple être conçu en forme de « U ».

Le cache est de préférence en contact avec la face supérieure ou inférieure du composant. Dans le cas d'un cache pour un bord périphérique dans la zone périphérique, le cache peut être en contact avec les côtés supérieur et inférieur du composant. Il est ainsi possible d'éviter l'irradiation directe de la lumière. Les caches permettent de créer une sorte de chambre noire. De manière avantageuse, le cache n'est pas en contact avec la surface dont la qualité doit être vérifiée. Cette zone doit rester sans contact pour détecter la lumière qui la traverse.

Étant donné que le composant est au moins partiellement semi-transparent, la lumière ne peut, de préférence, passer à travers le composant que vers la surface dont la qualité doit être contrôlée. La lumière peut donc être couplée dans le matériau. De préférence, la lumière pénètre dans le composant par une surface non pourvue d'un revêtement, en particulier une surface non pourvue d'un revêtement opaque. Par exemple, il peut s'agir d'un bord extérieur du composant. De même, le composant peut ne posséder un revêtement que sur une seule surface, en particulier opaque. Dans ce cas, la lumière peut être couplée dans le matériau par la surface non pourvue d'un revêtement et dirigée à travers le matériau vers la surface à inspecter. Il est donc avantageux que le matériau soit au moins partiellement transparent ou translucide.

La qualité du revêtement est évaluée en détectant la lumière qui pénètre à travers le revêtement de la surface pourvue d'un revêtement. Ceci se fait de préférence de l'extérieur du composant. Un détecteur photoélectrique, une caméra ou un appareil similaire peuvent être utilisés pour ce faire, mais le contrôle peut également être effectué à l'œil nu, par exemple. De l'extérieur du composant, il est possible d'évaluer si la lumière traverse le revêtement sur la surface ou sur le bord périphérique. En d'autres termes, sur la face du revêtement qui est en contact avec le matériau, la lumière est dirigée à travers le matériau vers le revêtement. L'évaluation de la qualité du revêtement s'effectue sur l'autre côté du revêtement, qui se trouve en dehors de la surface. Ceci est obtenu en particulier par le fait que la lumière pénétrant à travers le revêtement peut être détectée sur ce côté. Si de la lumière est détectée, il y a un défaut dans le revêtement. Un défaut peut être, par exemple, un vide, c'est-à-dire un trou dans le revêtement. De même, un défaut peut être une zone possédant un revêtement trop mince, à travers laquelle une petite quantité de lumière transparaît.

Avec le dispositif décrit, par exemple, 100 % de tous les composants fabriqués peuvent être contrôlés facilement et rapidement dans un processus de production en flux continu. Aspect particulièrement avantageux, le contrôle n'entraîne aucune destruction. Après la détection d'un défaut, par exemple un trou dans le revêtement ou une zone possédant un revêtement trop mince, le composant peut être réparé, par exemple le revêtement peut être retravaillé. Par conséquent, il n'y a pas de déchets car tous les composants peuvent être réutilisés ou réparés.

Avantageusement, l'appareil décrit ci-dessus peut détecter un défaut systématique dans le processus de production sur une surface ou un bord périphérique repeint. Un défaut systématique peut être déduit, par exemple, d'une erreur dans l'application de vernis par un applicateur de vernis ou par la vernisseuse. L'on peut parler de défaut systématique si au moins trois composants présentent toujours le même défaut ou une tendance à se détériorer au point de créer un défaut dans le revêtement. Si les composants sont vérifiés directement après le revêtement au moyen de l'appareil proposé, l'application du vernis par un applicateur de vernis peut être immédiatement modifiée ou corrigée. Ainsi, d'autres défauts dans le revêtement d'autres composants peuvent être évités rapidement et facilement.

Selon l'invention, au moins un capteur de lumière et une unité d'évaluation sont prévus, le capteur de lumière étant disposé à proximité de la surface dans l'évidement et/ou sur le bord extérieur. Cela permet au capteur de lumière de détecter la lumière pénétrant à travers la surface à partir d'une position à l'extérieur du composant. En outre, l'unité d'évaluation peut effectuer une évaluation de la qualité du revêtement sur la base d'un signal du capteur. Le capteur de lumière est de préférence situé dans la zone protégée contre l'irradiation directe de la lumière. Ainsi, le capteur de lumière ne peut détecter que la lumière qui traverse la surface, c'est-à-dire le bord périphérique. De préférence, ce capteur de lumière peut être aligné de sorte qu'il peut être utilisé pour l'évaluation de la qualité du bord périphérique complet. Le dispositif d'évaluation, en revanche, peut être placé à n'importe quel endroit, y compris à l'extérieur de l'évidement. Le capteur de lumière utilisé peut, de manière générale, être un composant photoélectrique, par exemple une photorésistance, mais aussi une caméra, de préférence une caméra d'un ordinateur portable tel qu'un smartphone, une tablette, etc. ; éventuellement même l'œil humain, dans le cadre d'un contrôle manuel.

Dans un mode de réalisation préféré, le capteur de lumière peut être rotatif et/ou mobile et balayer la surface au moins par endroits. Un tel capteur de lumière peut, par exemple, être utilisé pour un évidement ayant un bord périphérique circonférentiel, en particulier un bord périphérique ayant la forme d'un pourtour complet. Lors du balayage d'une surface circonférentielle, il est préférable de faire tourner le capteur de lumière au moins une fois de 360°. La qualité du revêtement sur toute la surface peut ainsi être évaluée, la position angulaire et/ou les coordonnées pouvant également être utilisées pour identifier l'emplacement du défaut. Il est également possible de déplacer le capteur de lumière le long d'une surface située sur le bord périphérique du composant pour déterminer la position du défaut. Une telle surface est créée, par exemple, si la géométrie du composant, en particulier son contour extérieur, est modifiée par la suite. Par exemple, un robot programmable peut être prévu pour déplacer le capteur de lumière le long de la surface. Ainsi, il est possible de tester la qualité du revêtement d'une série de profilés d'arêtes périphériques convexes et concaves. Pour un parcours irrégulier, il est possible d'utiliser un pilotage basé sur les coordonnées.

De manière avantageuse, le capteur de lumière peut être agencé sous forme de photorésistance.

Dans un mode de réalisation préféré, au moins deux, en particulier quatre ou plus capteurs de lumière peuvent être disposés décalés et/ou inclinés l'un par rapport à l'autre le long de la surface. A ce titre, la surface peut de préférence avoir la forme d'un pourtour complet. Dans le cas d'un évidement par exemple, trois, en particulier quatre capteurs de lumière peuvent être disposés à l'intérieur d'un évidement. De manière préférée, les capteurs de lumière sont disposés à la même distance les uns des autres. Dans le cas de quatre capteurs de lumière, par exemple, chaque capteur de lumière peut être utilisé pour évaluer la qualité d'un quart de la surface afin de déterminer la position d'un emplacement comportant un défaut de revêtement.

Dans un mode de réalisation préféré, un élément diffuseur de lumière peut être disposé à côté de la surface, lequel peut conduire la lumière pénétrant à travers le revêtement vers au moins un capteur de lumière. L'élément diffuseur de lumière peut, par exemple, être un prisme ou un type similaire d'élément de guidage de la lumière qui peut diriger la lumière vers le capteur de lumière sur une certaine distance le long du bord périphérique, en particulier le long de l'intégralité du bord périphérique.

Selon l'invention, le cache est appliqué sur les surfaces adjacentes de la surface formant le bord périphérique à évaluer. En particulier, le cache peut être appliqué des deux côtés sur les surfaces adjacentes au bord extérieur ou à l'évidement. A ce titre, le cache, en particulier sur la face tournée vers la surface du composant, peut être totalement réfléchissant par endroits, en particulier spéculaire par endroits. Les surfaces adjacentes se trouvent de manière préférée sur la face supérieure ou inférieure du composant. De manière préférée, les surfaces adjacentes sont essentiellement alignées perpendiculairement à la surface formant le bord périphérique. Afin de diriger la lumière dans la direction de la surface formant le bord périphérique, le cache peut être totalement réfléchissant par endroits sur la face inférieure. De manière préférée, cette zone totalement réfléchissante est située à l'endroit où le cache est en contact avec la surface adjacente. En particulier, le cache ne doit pas être totalement réfléchissant ou spéculaire dans la zone des surfaces libres, en particulier dans la zone de la surface avec le revêtement, c'est-à-dire le bord périphérique. Grâce à la propriété totalement réfléchissante du cache, la lumière est dirigée de manière particulièrement efficace sur le bord pourvu d'un revêtement afin de détecter les défauts grâce à une forte intensité lumineuse.

L'objet de l'invention est en outre un procédé d'évaluation de la qualité d'un revêtement d'une surface selon la revendication 6, la surface étant disposée sur un évidement et/ou un bord extérieur du composant. La surface forme ainsi un bord périphérique comme décrit ci-dessus.

Il est proposé que les surfaces adjacentes de la surface soient recouvertes par le revêtement, en particulier des deux côtés, d'une manière opaque. A ce titre, la lumière de la source lumineuse est couplée dans le matériau transparent ou semi-transparent. En particulier, la lumière est couplée dans le polycarbonate et/ou dans un matériau multicouche ou un matériau pourvu d'un revêtement en surface du composant. La qualité du revêtement est évaluée par la détection de la lumière qui pénètre à travers le revêtement de la surface.

Un procédé de ce genre peut être utilisé pour inspecter des composants, comme par exemple un composant de l'enveloppe extérieure d'un véhicule. Un tel composant peut, par exemple, être un pare-chocs en polycarbonate possédant un revêtement opaque. Le matériau du pare-chocs est de manière préférée transparent ou semi-transparent. Le revêtement peut être monocouche ou multicouche et se composer d'un matériau à base de polyuréthane. De manière préférée, le revêtement est opaque. Lors du fraisage ultérieur d'un évidement ou d'un bord périphérique modifié, on obtient une arête de coupe qui ne comporte pas de revêtement.

Ce procédé permet de contrôler les défauts de revêtements comme avec le dispositif décrit. Les variantes et avantages décrits ci-dessus s'appliquent également au procédé.

Dans un mode de réalisation préféré du procédé, le revêtement peut être translucide, opaque, en particulier noir, au moins partiellement ou par endroits. De manière préférée, le revêtement peut être un revêtement à base de polyuréthane. L'évaluation de la qualité peut être effectuée sur la base de la quantité de lumière pénétrant à travers le revêtement de la surface. En particulier, l'épaisseur du revêtement peut être évaluée lors de l'évaluation de la qualité, du fait qu'une variation de l'épaisseur du revêtement est évaluée en fonction d'une variation de l'intensité lumineuse détectée. Par exemple, pour une épaisseur de couche souhaitée, il est possible de déterminer une valeur limite correspondante d'intensité lumineuse ou de quantité de lumière. En cas d'écart entre la quantité de lumière mesurée et cette valeur limite, un défaut, par exemple un revêtement trop fin, peut être détecté. Si des zones d'un revêtement trop fin sont déterminées, des valeurs avec une intensité lumineuse supérieure à la valeur limite peuvent être considérées comme critiques. Dans cette zone, le revêtement du composant peut ensuite être retravaillé, par exemple, une autre couche de matériau de revêtement peut être appliquée. Par l'utilisation d'une quantité variable de lumière et la détermination d'une valeur limite de lumière, il est également possible d'évaluer l'épaisseur de revêtement souhaitée.

Dans un mode de réalisation préféré du procédé, la lumière peut être couplée dans le composant via une surface transparente et dirigée vers la surface. En particulier, la lumière provenant de la source lumineuse peut être couplée dans une plage angulaire de 20° ou moins, en particulier de 10° ou moins, par rapport à l'angle de réflexion totale du matériau et dans la direction de la surface. Lorsque l'angle d'incidence de la lumière a atteint l'angle de réflexion totale, la lumière n'est plus réfractée, mais est totalement réfléchie. Dans la plage de l'angle de réflexion totale, la lumière est guidée presque parallèlement à la surface de délimitation et peut donc être guidée vers le bord périphérique avec une intensité élevée. Ainsi, il est possible de s'assurer que la lumière peut être guidée pour traverser le matériau du composant jusqu'à la surface dont la qualité doit être examinée. Avantageusement, il est également possible de coupler la lumière de la source lumineuse directement dans la surface du matériau par l'intermédiaire d'une structure de couplage de lumière avec des propriétés optiques adaptées vers le bord périphérique pourvu d'un revêtement afin de permettre un guidage ciblé de la lumière dans le matériau vers le bord périphérique pourvu d'un revêtement. La structure de couplage de la lumière peut posséder les mêmes propriétés optiques ou des propriétés optiques modifiées que celles du matériau du composant à examiner.

Dans un mode de réalisation préféré du procédé, l'au moins un capteur de lumière peut déterminer la quantité et/ou la position de la lumière irradiant à travers la surface. Ceci permet de détecter l'épaisseur et/ou la position d'un emplacement défectueux du revêtement sur la surface. Un signal d'erreur ou une détérioration progressive d'un signal d'erreur provenant de l'au moins un capteur de lumière permet de déduire, par exemple, un début de mauvaise application systématique de vernis par un applicateur de vernis ou une vernisseuse.

Dans un mode de réalisation préféré du procédé, il est possible d'effectuer un contrôle à 100 % de tous les composants. En outre, une erreur de production systématique peut être évaluée à partir de la détermination de la position. En particulier, cela permet d'évaluer une application incorrecte d'un applicateur de vernis et/ou d'une vernisseuse. Si, par exemple, des défauts systématiquement identiques ou se détériorant progressivement sont toujours détectés à la même position du revêtement, on peut présumer un défaut systématique. Un défaut est considéré comme systématique si, par exemple, au moins le revêtement de trois composants présente le même défaut ou une tendance progressive aux défauts. Le procédé proposé est un test n'entraînant pas de destruction. Par conséquent, tous les composants peuvent être vérifiés à l'aide du procédé. Les composants défectueux peuvent alors être réparés et n'ont pas besoin d'être éliminés.

Dans un mode de réalisation préféré du procédé, l'épaisseur du composant peut être petite. La surface peut former une surface relativement petite dans un rapport d'au moins 1:100, de manière préférée 1:1000, en particulier 1:5000, par rapport à la surface totale du composant. Le composant peut être conçu géométriquement comme une sorte de plaque. Le composant en polycarbonate peut être fabriqué par moulage par injection.

Dans un mode de réalisation préféré du procédé, au moins un capteur de lumière peut être disposé à proximité de la surface formant le bord périphérique. En particulier, il est possible de disposer un capteur de lumière rotatif ou mobile et/ou une pluralité de capteurs de lumière décalés ou inclinés les uns par rapport aux autres. Le(s) capteur(s) de lumière sont utilisés de manière préférée pour déterminer la position de la lumière pénétrant dans le revêtement. Dans le cas d'un évidement, par exemple trois, en particulier quatre capteurs de lumière peuvent être disposés à l'intérieur d'un évidement. Les capteurs de lumière sont de manière préférée disposés à la même distance les uns des autres.

Dans un mode de réalisation préféré du procédé, la source lumineuse peut fournir une lumière de différentes couleurs. En particulier, la source lumineuse peut fournir une lumière adaptée au matériau du composant et/ou du revêtement. Il peut s'agir, par exemple, de rayons allant de l'infrarouge à l'ultraviolet et/ou de rayons d'intensités variables. A ce titre, la lumière utilisée peut être adaptée au niveau de transparence du revêtement à contrôler. De cette façon, il est également possible d'inspecter les revêtements qui ne protègent que contre la lumière d'une certaine plage de longueurs d'onde. Un défaut dans le revêtement pourrait donc être détecté lors de la mesure de la lumière dans cette plage de longueurs d'onde.

Si nécessaire, il est également possible de coupler la lumière dans le matériau via l'arête de coupe, c'est-à-dire la surface de l'arête périphérique, et de détecter la lumière pénétrant à travers le revêtement d'arête périphérique dans le matériau depuis l'extérieur, en particulier l'extérieur et le long d'un contour extérieur, c'est-à-dire une inversion du principe exposé ci-dessus.

De manière avantageuse, l'évaluation de la qualité du revêtement de la surface peut être effectuée dans une pièce complètement sombre. Ceci élimine pratiquement toute possibilité d'erreur d'évaluation due à la lumière diffusée et à la lumière étrangère. De plus ou en outre, une valeur-seuil variable de la quantité de lumière peut être prise en compte pour évaluer de manière fiable un défaut dans le revêtement. Il est notamment possible d'utiliser de la lumière infrarouge, ou de choisir une couleur de lumière qui n'est pas ou peu présente dans la lumière ambiante.

A l'aide du dispositif et du procédé d'évaluation de la qualité du revêtement d'une arête de coupe d'un composant en plastique de l'enveloppe extérieure d'un véhicule, il est possible d'empêcher efficacement une infiltration et le détachement d'un revêtement de surface sur le composant en plastique, puisque l'arête de coupe peut être complètement contrôlée et efficacement étanchéifiée par le revêtement de bordure périphérique.

### Brève description des figures

D'autres avantages sont présentés dans les présents dessins et descriptions de dessins. Les dessins présentent des exemples de modes de réalisation de l'invention. Combinés, les dessins, la description et les revendications contiennent de nombreuses caractéristiques. L'homme du métier examinera également les caractéristiques individuellement de manière appropriée et les synthétisera en d'autres combinaisons significatives.

L'invention sera mieux comprise à la lecture de la description qui va suivre donnée uniquement à titre d'exemple et faite en se référant aux dessins annexés dans lesquels :
[Fig. 1] la figure 1 est une vue en plan d'un mode de réalisation d'un dispositif selon l'invention ou d'un procédé selon l'invention avec un composant ;
[Fig. 2] la figure 2 est une vue en coupe de la figure 1 ;
[Fig. 3] la figure 3 est une vue détaillée de la vue en coupe de la figure 2 ;
[Fig. 4] la figure 4 est un autre mode de réalisation d'un dispositif selon l'invention ou d'un procédé selon l'invention ;
[Fig. 5] la figure 5 est une vue détaillée d'un autre mode de réalisation d'un dispositif selon l'invention ou d'un procédé selon l'invention ;
[Fig. 6] la figure 6 est une vue détaillée d'un autre mode de réalisation d'un dispositif selon l'invention ou d'un procédé selon l'invention.

### Description détaillée

Dans les figures, les composants identiques ou similaires sont numérotés avec des références identiques.

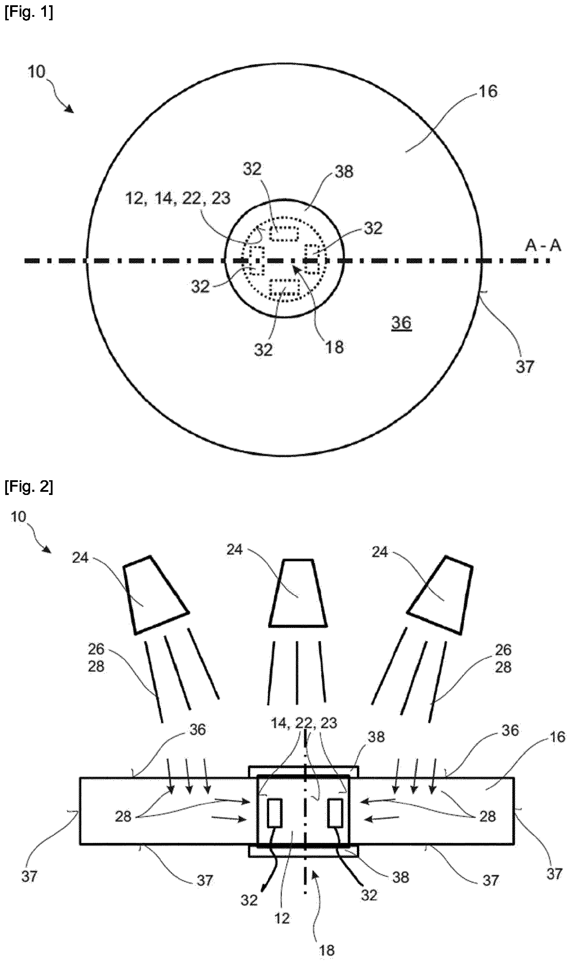

La Fig. 1 montre une vue en plan d'un mode de réalisation d'un dispositif 10 selon l'invention ou d'un procédé selon l'invention avec un composant 16. A titre d'exemple, un composant rond 16 est représenté, lequel possède également un évidement rond 18. Cette ouverture 18 est recouverte d'un cache 38. A ce titre, le cache 38 possède un diamètre supérieur à celui de l'évidement 18. La surface 14 est fraisée dans le composant 16 comme un évidement pour un composant fonctionnel tel qu'un capteur radar, et pourvue d'un revêtement 12 opaque faisant office de protection. La surface 14 est protégée de l'irradiation directe de la lumière par le cache 38. Ceci est possible car le cache 38 est opaque. Dans cette représentation, l'évidement 18 est située derrière le cache 38 et est donc montrée en pointillés. Dans ce mode de réalisation, quatre capteurs de lumière 32 sont disposés dans l'évidement 18. Ceux-ci sont également représentés en pointillés, car ils sont également disposés derrière le cache 38. Les capteurs de lumière 32 sont alignés avec la surface 14, qui représente un bord périphérique 22. Le revêtement 12 dont la qualité doit être évaluée se trouve sur la surface 23 du bord périphérique 22. Dans ce mode de réalisation, la surface du composant 16 représentée ci-dessus est une surface transparente 36. Il peut également s'agir d'une surface semi-transparente 36. Cela signifie qu'il n'y a pas de revêtement, en particulier pas de revêtement opaque, sur cette surface. En revanche, le bord extérieur du composant rond 16 possède une surface pourvue d'un revêtement 37. Par conséquent, lors d'une irradiation lumineuse 26 à travers la surface dans la représentation ci-dessus, la lumière 28 peut être introduite dans le matériau du composant 16, et de là, atteindre la surface 14. Il est donc particulièrement important que le cache 38 recouvre complètement l'évidement 18.

Une vue en coupe le long de l'axe A-A de la Fig. 1 est présentée à la Fig. 2. Les mêmes caractéristiques sont pourvues des mêmes références, de sorte qu'il n'est pas nécessaire d'y revenir. L'illustration montre qu'un autre cache 38 est disposé sous le composant 16 au niveau de l'évidement 18. Ainsi, une sorte de chambre noire fermée aux ¾ (trois quarts) peut être créée dans la zone de l'évidement 18. Dans ce mode de réalisation, le composant 16 est également pourvu d'un revêtement sur la surface inférieure, représentée comme une surface pourvue d'un revêtement 37. En conséquence, la source lumineuse 24 est disposée sur le côté du composant 16 qui a une surface transparente 36. Dans ce mode de réalisation, il y a trois sources lumineuses 24 qui émettent de la lumière 28 sur le composant 16 sous différents angles vers la surface 14 pourvue d'un revêtement. Ici, l'irradiation lumineuse 26 directe s'effectue de la source lumineuse 24 respective à la surface transparente 36 du composant 16. La lumière 28 est couplée dans le matériau via la surface transparente 36. Dans le matériau du composant 16, la lumière 28 est dirigée indirectement à travers l'intérieur du matériau vers la surface 14. Ainsi, toute la surface 23 du bord périphérique 22 peut être atteinte. Deux capteurs de lumière 32 sont visibles à l'intérieur de l'évidement 18 dans cette vue en coupe. Ces capteurs de lumière 32 peuvent détecter la lumière 28 qui pénètre à travers la surface 14 à partir d'une position extérieure au composant 16, c'est-à-dire dans l'évidement 18 dans ce cas.

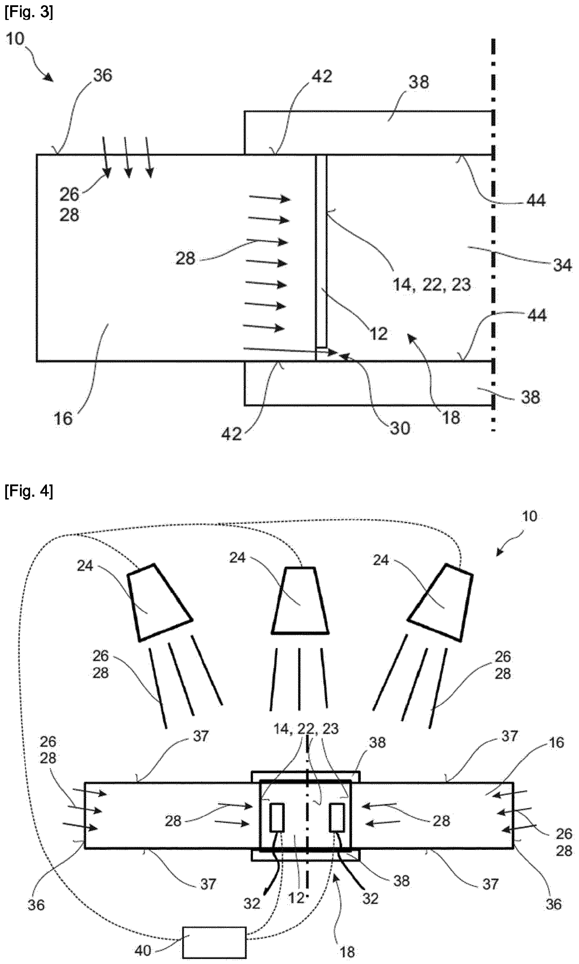

La Fig. 3 représente une vue détaillée de la vue en coupe de la Fig. 2. Dans cette illustration, on peut voir que le revêtement 12 sur la surface 14 présente un défaut à une position 30, par exemple un trou. Dans cette position 30, la lumière 28 pénètre de l'intérieur du matériau du composant 16 à travers le revêtement 12 et pénètre dans l'évidement 18. Cette lumière 28 peut donc être détectée avec le capteur de lumière 32 (non représenté sur cette illustration). L'illustration montre également que les deux caches 38 dans la zone de la surface adjacente 42 sont en contact avec le composant 16. Ces surfaces adjacentes 42 peuvent être totalement réfléchissantes ou spéculaires, au moins par endroits. De cette manière, la lumière 28 couplée présente à l'intérieur du composant 16 peut être dirigée de manière optimale sur la surface 14. Les surfaces libres 44 des caches 38 ne possèdent pas de telles zones totalement réfléchissantes ou spéculaires, puisque la lumière 28 dans cette zone doit être située directement à la position 30.

La Fig. 4 montre un autre mode de réalisation d'un dispositif 10 selon l'invention ou d'un procédé selon l'invention. Contrairement à la représentation de la Fig. 2, une unité d'évaluation est montrée. Celle-ci est couplée aux capteurs de lumière 32 et aux sources lumineuses 24. Cette unité d'évaluation 40 peut évaluer automatiquement la qualité du revêtement sur la base d'au moins un signal de capteur provenant d'au moins un capteur de lumière 32. L'évaluation de la qualité peut être évaluée sur la base de la quantité de lumière 28 pénétrant à travers le revêtement 12. Même avec une intensité lumineuse variable, une épaisseur du revêtement 12 peut être détectée si une valeur limite de lumière détectée par le capteur de lumière 32 est détectée pour une certaine quantité de lumière de la source lumineuse 24. En d'autres termes, une variation de l'épaisseur du revêtement 12 est évaluée en fonction d'une variation de l'intensité lumineuse détectée pour une certaine quantité de lumière ou intensité lumineuse émise par la source lumineuse 24. Par exemple, l'épaisseur du revêtement peut être déterminée pour chaque emplacement sur la surface 14. La position 30 exacte d'un emplacement défectueux du revêtement 12 peut également être déterminée. Les composants 16 dont le revêtement 12 est défectueux peuvent alors être retravaillés et réutilisés.

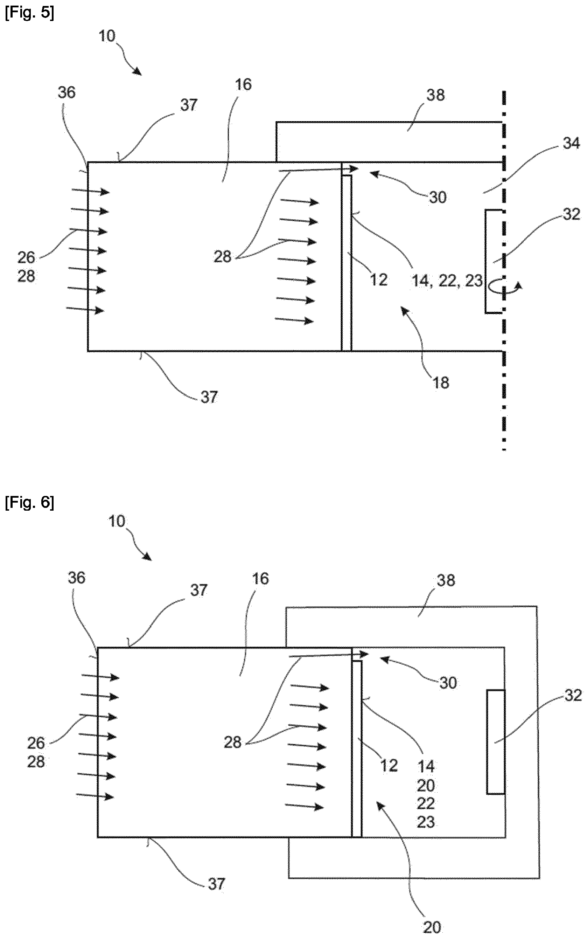

Les Fig. 5 et 6 montrent d'autres vues détaillées d'autres modes de réalisation d'un dispositif 10 selon l'invention ou d'un procédé selon l'invention.

Dans la Fig. 5, un seul capteur de lumière 32 est disposé au centre dans l'évidement 18. Le capteur de lumière 32 est rotatif et peut balayer complètement la surface 14. Par une rotation de 360° par exemple, le capteur de lumière 32 peut atteindre n'importe quelle position de la surface 14, si la surface 14 est par exemple formée comme sur la figure 1. Dans ce mode de réalisation, seul un cache 38 est disposé dans la zone supérieure du composant 16 ou de l'évidement 18. Ceci est possible, par exemple, si le composant 16 repose sur un support (non représenté). A la différence du mode de réalisation selon les Fig. 1-3, le composant 16 possède une surface pourvue d'un revêtement 37 sur la face inférieure. En revanche, dans la zone de l'épaisseur du composant 16, la surface extérieure est formée comme une surface transparente 36. La lumière 28 est donc couplée dans le matériau via cette surface transparente 36. Dans cette illustration, le revêtement 12 de la surface 14 présente un défaut dans la zone supérieure à la position 30. A cette position 30, la lumière 28 peut entrer dans la zone de l'évidement 18. Le capteur de lumière 32 peut détecter cette position 30.

La Fig. 6 montre un bord extérieur 20 du composant 16. Celui-ci peut être créé, par exemple, si la géométrie du composant 16, en particulier son contour extérieur, est modifiée par la suite. Par conséquent, il n'y a pas d'ouverture. De ce fait, le cache 38 est en forme de « U » et est en contact avec le côté supérieur et le côté inférieur du composant 16. Grâce à la forme en « U » du cache 38, il est possible de former une chambre noire fermée aux ¾ (trois quarts), laquelle entoure complètement la surface 14. Dans ce mode de réalisation, par exemple, plusieurs capteurs de lumière 32 peuvent être décalés les uns par rapport aux autres et disposés le long du bord extérieur 20. Ceci permet d'évaluer la qualité de l'ensemble de la surface 14 ou du revêtement 12.

Les modes de réalisation représentés peuvent bien entendu être combinés les uns avec les autres pour créer d'autres exemples de modes de réalisation. En particulier, la géométrie du composant 16 peut être différente. Le composant 16, par exemple, peut être constitué de polycarbonate ou de matériaux comparables. Le dispositif 10 et le procédé sont particulièrement adaptés pour un contrôle intégral de composants en plastique du secteur automobile. Ces composants plastiques peuvent être, par exemple, des pare-chocs ou d'autres composants de l'enveloppe extérieure du véhicule ou encore des éléments de revêtement intérieur comportant des évidements pourvus d'un revêtement destinés à des capteurs, des actionneurs ou d'autres composants fonctionnels du véhicule.

### Liste de références

10 : dispositif
12 : revêtement
14 : surface
16 : composant
18 : ouverture
20 : bord extérieur
22 : bord périphérique
23 : surface du bord périphérique
24 : source lumineuse
26 : irradiation lumineuse directe
28 : lumière
30 : position
32 : capteur de lumière
34 : pourtour complet
36 : surface transparente/semi-transparente
37 : surface pourvue d'un revêtement
38 : cache
40 : unité d'évaluation
42 : surface adjacente
44 : surface libre

## Revendications

1. Dispositif (10) d'évaluation de la qualité d'un revêtement (12) sur au moins une surface (14) d'un composant (16), dans lequel la surface (14) est disposée dans un évidement (18) et/ou sur un bord extérieur (20) du composant (16), la surface (14) formant un bord périphérique (22), et le composant (16) est constitué au moins partiellement d'un matériau au moins semi-transparent, en particulier transparent, comprenant au moins une source lumineuse (24) et au moins un cache (38), de sorte que le composant (16) peut être irradié par la lumière (28) provenant de la source lumineuse (24) et la surface (14) peut être protégée par le cache (38) contre l'irradiation lumineuse directe (26), de telle sorte que la lumière (28) peut être couplée dans le matériau et ne peut passer vers la surface (14) formant le bord périphérique (22) qu'indirectement à travers l'intérieur du matériau du composant (16), et une qualité du revêtement (12) peut être évaluée par une détection de la lumière (28) traversant le revêtement (12) de la surface (14)
le dispositif (10) comprenant au moins un capteur de lumière (32) et une unité d'exploitation (40), le capteur de lumière (32) étant disposé à proximité de la surface (14) dans l'évidement (18) et/ou sur le bord extérieur (20), de sorte que le capteur de lumière (32) peut détecter la lumière (28) traversant la surface (14) depuis une position extérieure au composant (16), et l'unité d'exploitation (40) peut effectuer une évaluation qualitative du revêtement (12) à partir du signal du capteur,
le cache (38) étant appliqué sur des surfaces adjacentes (42) à la surface (14) à évaluer.

2. Dispositif (10) selon la revendication précédente, dans lequel le capteur de lumière (32) est rotatif et/ou mobile et peut balayer la surface (14) au moins par endroits.

3. Dispositif (10) selon la revendication 1 ou dans lequel au moins deux, en particulier au moins quatre capteurs de lumière (32) sont disposés de manière décalée et/ou inclinée l'un par rapport à l'autre le long de la surface (14), la surface (14) ayant de préférence la forme d'un pourtour complet (34).

4. Dispositif (10) selon l'une des revendications précédentes, dans lequel un élément diffuseur de lumière est disposé à proximité de la surface (14), lequel élément dirige la lumière (28) traversant le revêtement (12) vers au moins un capteur de lumière (32).

5. Dispositif selon l'une des revendications précédentes, dans lequel le cache (38) est appliqué des deux côtés sur des surfaces adjacentes (42) au bord extérieur (20) ou à l'évidement (18), et le cache (38) est en particulier formé sur la face tournée vers la surface du composant (16) de manière à être totalement réfléchissant au moins par endroits, en particulier spéculaire par endroits.

6. Procédé d'évaluation de la qualité d'un revêtement (12) d'une surface (14) avec un dispositif (10) selon l'une des revendications précédentes, dans lequel la surface (14) est disposée dans un évidement (18) et/ou sur un bord extérieur (20) du composant (16), la surface (14) formant un bord périphérique (22), et dans lequel des surfaces (42) adjacentes à la surface (14) sont couvertes de manière opaque au moyen du cache (38), notamment sur ses deux faces, la lumière (28) provenant de la source lumineuse (24) est couplée dans le matériau transparent ou semi-transparent, en particulier le polycarbonate, et/ou dans le matériau multicouche ou revêtu en surface du composant (16), et une qualité du revêtement (12) est évaluée par la détection de la lumière (28) traversant le revêtement (12) de la surface (14).

7. Procédé selon la revendication 6, dans lequel le revêtement (12) est au moins partiellement transparent, opaque, en particulier noir, et est de préférence un revêtement (12) à base de polyuréthane, et l'évaluation de la qualité est effectuée sur la base d'une quantité de lumière (28) traversant le revêtement (12) de la surface (14), en particulier une variation de l'épaisseur du revêtement (12) est évaluée en fonction d'une variation de l'intensité lumineuse détectée.

8. Procédé selon la revendication 6 ou 7, dans lequel la lumière (28) est couplée dans le composant (16) par l'intermédiaire d'une surface transparente (36) et est conduite vers la surface (14), en particulier en ce que la lumière (28) de la source lumineuse (24) est couplée dans une plage angulaire de 20° ou moins, en particulier de 10° ou moins, avec l'angle de réflexion totale du matériau et dans la direction de la surface (14).

9. Procédé selon l'une des revendications 6 à 8, dans leur rattachement à l'une des revendications 1 à 3 ou 4 dépendante de l'une des revendications 1 à 4, ou dans leur rattachement à la revendication 5 dépendante de l'une des revendication 1 à 3 ou 4 dépendante de l'une des revendications 1 à 3, dans lequel l'au moins un capteur de lumière (32) détermine une quantité et/ou une position de la lumière (28) rayonnant à travers la surface (14) afin de déterminer l'épaisseur et/ou la position d'un emplacement défectueux du revêtement (12) de la surface (14).

10. Procédé selon l'une des revendications 6 à 9, dans lequel la surface (14) formant le bord périphérique (22) forme une surface (23) relativement petite dans un rapport d'au moins 1:100, de préférence 1:1000, en particulier 1:5000 par rapport à la surface totale du composant (16).

11. Procédé selon l'une des revendications 6 à 10, dans leur rattachement à l'une des revendications 1 à 3 ou 4 dépendante de l'une des revendications 1 à 3, ou dans leur rattachement à la revendication 5 dépendante de l'une des revendication 1 à 3 ou 4 dépendante de l'une des revendications 1 à 3, dans lequel au moins un capteur de lumière (32) est disposé à proximité de la surface (14) formant le bord périphérique (22), en particulier un capteur de lumière rotatif ou mobile (32) et/ou une pluralité de capteurs de lumière (32) qui sont décalés ou inclinés les uns par rapport aux autres, pour déterminer la position de la lumière (28) traversant le revêtement (12).

12. Procédé selon l'une des revendications 6 à 11, dans lequel la source lumineuse (24) fournit une lumière (28) de différentes couleurs, en particulier une lumière (28) adaptée au matériau du composant (16) et/ou du revêtement (12), de l'infrarouge à l'ultraviolet et/ou à intensité variable.

13. Procédé selon l'une des revendications 6 à 12, dans lequel l'évaluation de la qualité du revêtement (12) de la surface (14) est effectuée dans une pièce complètement sombre.

## Patentansprüche

1. Vorrichtung (10) zur Bewertung der Qualität einer Beschichtung (12) auf wenigstens einer Oberfläche (14) eines Bauteils (16), wobei die Oberfläche (14) in einer Ausnehmung (18) und/oder auf einem äußeren Rand (20) des Bauteils (16) angeordnet ist, wobei die Oberfläche (14) einen umlaufenden Rand (22) bildet, und das Bauteil (16) wenigstens teilweise aus einem halb-transparenten, insbesondere transparenten Material besteht,
umfassend wenigstens eine Lichtquelle (24) und wenigstens eine Abdeckung (38), so dass das Bauteil (16) durch das von der Lichtquelle (24) stammende Licht (28) bestrahlt werden kann und die Oberfläche (14) durch die Abdeckung (38) von der direkten Lichtbestrahlung (26) geschützt werden kann, so dass das Licht (28) in das Material eingekoppelt werden kann und zu der den umlaufenden Rand (22) bildenden Oberfläche (14) hin nur indirekt durch das Innere des Materials des Bauteils (16) hindurchtreten kann, und eine Qualität der Beschichtung (12) durch eine Detektion des Lichts (28), das durch die Beschichtung (12) der Oberfläche (14) hindurchtritt, bewertet werden kann,
wobei die Vorrichtung (10) wenigstens einen Lichtsensor (32) und eine Auswerteeinheit (40) umfasst, wobei der Lichtsensor (32) in der Nähe der Oberfläche (14) in der Ausnehmung (18) und/oder auf dem äußeren Rand (20) angeordnet ist, so dass der Lichtsensor (32) das Licht (28), das von einer Position außerhalb des Bauteils (16) aus durch die Oberfläche (14) hindurchtritt, detektieren kann und die Auswerteeinheit (40) eine qualitative Bewertung der Beschichtung (12) anhand des Signals des Sensors vornehmen kann,
wobei die Abdeckung (38) auf Oberflächen (42) aufgebracht ist, die zu der Oberfläche, die bewertet werden soll, benachbart sind.

2. Vorrichtung (10) nach dem vorhergehenden Anspruch, wobei der Lichtsensor (32) drehbar und/oder beweglich ist und die Oberfläche (14) zumindest stellenweise abtasten kann.

3. Vorrichtung (10) nach Anspruch 1 oder 2, wobei wenigstens zwei, insbesondere wenigstens vier, Lichtsensoren (32) relativ zueinander versetzt und/oder geneigt entlang der Oberfläche (14) angeordnet sind, wobei die Oberfläche (14) bevorzugt die Form eines vollständigen Umfangs (34) aufweist.

4. Vorrichtung (10) nach einem der vorhergehenden Ansprüche, wobei ein Element zur Lichtstreuung in der Nähe der Oberfläche (14) angeordnet ist, wobei das Element das durch die Beschichtung (12) hindurchtretende Licht (28) zu wenigstens einem Lichtsensor (32) hin leitet.

5. Vorrichtung nach einem der vorhergehenden Ansprüche, wobei die Abdeckung (38) beidseitig auf Oberflächen aufgebracht ist, die zu dem umlaufenden Rand (20) oder zu der Ausnehmung (18) benachbart sind, und die Abdeckung (38) insbesondere auf der Fläche gebildet ist, die zu der Oberfläche des Bauteils (16) hin weist, so dass sie wenigstens stellenweise vollständig reflektierend, insbesondere stellenweise spiegelnd ist.

6. Verfahren zur Bewertung der Qualität einer Beschichtung (12) einer Oberfläche (14) mit einer Vorrichtung (10) nach einem der vorhergehenden Ansprüche, wobei die Oberfläche (14) in einer Ausnehmung (18) und/oder auf einem äußeren Rand (20) des Bauteils (16) angeordnet ist, wobei die Oberfläche (14) einen umlaufenden Rand (22) bildet, und wobei Oberflächen (42), die zu der Oberfläche (14) benachbart sind, auf opake Weise mittels einer Abdeckung (38) bedeckt sind, insbesondere auf deren zwei Flächen, das von der Lichtquelle (24) stammende Licht (28) in das transparente oder halb-transparente Material, insbesondere Polycarbonat, und/oder in das mehrschichtige oder oberflächenbeschichtete Material des Bauteils (16) eingekoppelt wird und eine Qualität der Beschichtung (12) durch die Detektion des Lichts (28), das durch die Beschichtung (12) der Oberfläche (14) hindurchtritt, bewertet wird.

7. Verfahren nach Anspruch 6, wobei die Beschichtung (12) wenigstens teilweise transparent, opak, insbesondere schwarz ist und bevorzugt eine Beschichtung (12) auf Polyurethanbasis ist, und die Bewertung der Qualität auf der Basis einer Menge von Licht (28), das durch die Beschichtung (12) der Oberfläche (14) hindurchtritt, vorgenommen wird, insbesondere eine Veränderung der Dicke der Beschichtung (12) in Abhängigkeit von einer Veränderung der detektierten Lichtstärke bewertet wird.

8. Verfahren nach Anspruch 6 oder 7, wobei das Licht (28) in das Bauteil (16) über eine transparente Oberfläche (36) eingekoppelt wird und zu der Oberfläche (14) hin geleitet wird, insbesondere dadurch, dass das Licht (28) der Lichtquelle (24) in einem Winkelbereich von 20° oder weniger, insbesondere von 10° oder weniger, mit dem Totalreflexionswinkel des Materials und in der Richtung der Oberfläche (14) eingekoppelt wird.

9. Verfahren nach einem der Ansprüche 6 bis 8, in Verbindung mit einem der Ansprüche 1 bis 3 oder 4, der von einem der Ansprüche 1 bis 4 abhängig ist, oder in Verbindung mit Anspruch 5, der von einem der Ansprüche 1 bis 3 oder 4 abhängig ist, der von einem der Ansprüche 1 bis 3 abhängig ist, wobei wenigstens ein Lichtsensor (32) eine Menge und/oder eine Position des durch die Oberfläche (14) hindurch strahlenden Lichts (28) bestimmt, um die Dicke und/oder die Position einer defekten Stelle der Beschichtung (12) der Oberfläche (14) zu bestimmen.

10. Verfahren nach einem der Ansprüche 6 bis 9, wobei die den umlaufenden Rand (22) bildende Oberfläche (14) bildet, die in einem Verhältnis von wenigstens 1:100, bevorzugt 1:1000, relativ zu der Gesamtoberfläche des Bauteils (16) relativ klein ist.

11. Verfahren nach einem der Ansprüche 6 bis 10, in Verbindung mit einem der Ansprüche 1 bis 3 oder 4, der von einem der Ansprüche 1 bis 3 abhängig ist, oder in Verbindung mit Anspruch 5, der von einem der Ansprüche 1 bis 3 oder 4 4 abhängig ist, der von einem der Ansprüche 1 bis 3 abhängig ist, wobei wenigstens ein Lichtsensor (32) in der Nähe der den umlaufenden Rand (22) bildenden Oberfläche (14) angeordnet ist, insbesondere ein drehbarer oder beweglicher Lichtsensor (32) und/oder eine Mehrzahl von Lichtsensoren (32), die relativ zueinander versetzt und/oder geneigt sind, um die Position des Lichts (28), das durch die Beschichtung (12) hindurchtritt, zu bestimmen.

12. Verfahren nach einem der Ansprüche 6 bis 11, wobei die Lichtquelle (24) ein Licht (28) verschiedener Farben, insbesondere ein Licht (28), das an das Material des Bauteils (16) oder der Beschichtung (12) angepasst ist, von Infrarot bis Ultraviolett und/oder variabler Lichtstärke bereitstellt.

13. Verfahren nach einem der Ansprüche 6 bis 12, wobei die Bewertung der Qualität der Beschichtung (12) der Oberfläche (14) in einem völlig dunklen Raum vorgenommen wird.

## Claims

1. Device (10) for evaluating the quality of a coating (12) on at least one surface (14) of a component (16), wherein the surface (14) is disposed in a recess (18) and/or on an outer edge (20) of the component (16), the surface (14) forming a peripheral edge (22), and the component (16) consists at least partially of at least a semi-transparent material, in particular transparent, comprising at least one light source (24) and at least one cover (38), so that the component (16) can be irradiated by the light (28) from the light source (24) and the surface (14) can be protected by the cover (38) against direct light irradiation (26), so that the light (28) can be coupled into the material and cannot pass to the surface (14) forming the edge peripheral (22) only indirectly through the interior of the component material (16), and a quality of the coating (12) can be assessed by detection of light (28) passing through the coating (12) of the surface (14),
the device (10) comprising at least a light sensor (32) and an operating unit (40), the light sensor (32) being disposed close to the surface (14) in the recess (18) and/or on the outer edge (20), so that the light sensor (32) can detect light (28) passing through the surface (14) from a position external to the component (16), and the operating unit (40) can perform a qualitative evaluation of the coating (12) from the sensor signal,
the cover (38) being applied to surfaces adjacent (42) to the surface (14) to be evaluated.

2. Device (10) according to the preceding claim, wherein the light sensor (32) is rotatable and/or movable and can scan the surface (14) at least in places.

3. Device (10) according to claim 1 or 2, wherein at least two, in particular at least four light sensors (32) are arranged offset and/or inclined to each other along the surface (14), the surface (14) preferably having the shape of a complete circumference (34).

4. Device (10) according to one of the preceding claims, wherein a light-diffusing element is disposed close to the surface (14), which element directs the light (28) passing through the coating (12) to at least one light sensor (32).

5. Device according to one of the preceding claims, wherein the cover (38) is applied on both sides to surfaces adjacent (42) to the outer edge (20) or recess (18), and the cover (38) is formed in particular on the face facing the surface of the component (16) in such a way as to be fully reflective at least in places, especially specular in places.

6. Method for evaluating the quality of a coating (12) of a surface (14) with a device (10) according to one of the preceding claims, wherein the surface (14) is disposed in a recess (18) and/or on an outer edge (20) of the component (16), the surface (14) forming a peripheral edge (22), and wherein surfaces (42) adjacent to the surface (14) are covered opaquely by means of the cover (38), in particular on both sides, the light (28) from the light source (24) is coupled into the transparent or semi-transparent material, in particular polycarbonate, and/or into the multilayer or surface-coated material of the component (16), and a quality of the coating (12) is evaluated by detecting light (28) passing through the coating (12) of the surface (14).

7. Method according to claim 6, wherein the coating (12) is at least partially transparent, opaque, in particular black, and is preferably a polyurethane-based coating (12), and the quality assessment is carried out on the basis of an amount of light (28) passing through the coating (12) of the surface (14), in particular a variation in the thickness of the coating (12) is evaluated based on a detected variation in light intensity.

8. Method according to claim 6 or 7, wherein the light (28) is coupled into the component (16) via a transparent surface (36) and is conducted to the surface (14), in particular in that the light (28) of the light source (24) is coupled in an angular range of 20° or less, in particular 10° or less, with the angle of total reflection of the material and in the direction of the surface (14).

9. Method according to one of claims 6 to 8, in their connection with one of claims 1 to 3 or 4 dependent on one of claims 1 to 4, or in their connection with claim 5 dependent on one of claims 1 to 3 or 4 dependent on one of claims 1 to 3, wherein at least one light sensor (32) determines an amount and/or position of the light (28) radiating through the surface (14) in order to determine the thickness and/or position of a defective coating location (12) of the surface (14).

10. Method according to one of claims 6 to 9, wherein the surface (14) forming the peripheral edge (22) forms a relatively small area (23) in a ratio of at least 1:100, preferably 1:1000, in particular 1:5000 to the total area of the component (16).

11. Method according to one of claims 6 to 10, in their connection with one of claims 1 to 3 or 4 dependent on one of claims 1 to 3, or in their connection with claim 5 dependent on one of claims 1 to 3 or 4 dependent on one of claims 1 to 3, wherein at least one light sensor (32) is disposed close to the surface (14) forming the peripheral edge (22), in particular a rotating or moving light sensor (32) and/or a plurality of light sensors (32) that are offset or inclined with respect to each other, to determine the position of the light (28) passing through the coating (12).

12. Method according to one of claims 6 to 11, wherein the light source (24) provides light (28) of different colours, in particular light (28) suitable for the material of the component (16) and/or coating (12), from infrared to ultraviolet and/or dimmable.

13. Method according to one of claims 6 to 12, wherein the evaluation of the quality of the coating (12) of the surface (14) is carried out in a completely dark room.
